# EUROPÄISCHE PATENTSCHRIFT

(11) **EP 2 832 207 B1**
(45) Veröffentlichungstag und Bekanntmachung des Hinweises auf die Patenterteilung: **09.11.2016**
(21) Anmeldenummer: 14178549.3
(22) Anmeldetag: 25.07.2014
(51) Int. Cl.: A01F 25/18

(54) **Silageverdichtungseinrichtung**
Silage compression device
Dispositif d'étanchéification pour un ensilage

(30) Priorität: 31.07.2013 DE 202013006860 U
(43) Veröffentlichungstag der Anmeldung: 04.02.2015
(73) Patentinhaber: Thomßen, Petra, 26842 Ostrhauderfehn (DE)
(72) Erfinder: Thomßen, Petra, 26842 Ostrhauderfehn (DE)
(74) Vertreter: Jabbusch, Matthias

(56) Entgegenhaltungen:
- DE-A1- 19 537 085
- DE-B3-102006 012 851
- DE-U1-202010 006 957

## Beschreibung

Die Erfindung betrifft eine Silageverdichtungseinrichtung, die von einem Schlepper aufgenommen und betrieben werden kann, nach dem Oberbegriff des Anspruches 1. Ein Schlepper mit einer derartigen Silageverdichtungseinrichtung wird dazu eingesetzt, Silage, wie Gras oder Mais, die zu einem Silo, insbesondere Freigärhaufen, aufgeschichtet ist, zu verdichten. Hierzu befährt der Schlepper die Silage. Dabei wird die Silage mittels der Reifen des Schleppers sowie mittels der Silageverdichtungseinrichtung von oben verdichtet. Ein Verdichtungsdruck wird dabei durch das Eigengewicht des Schleppers bereitgestellt. Dieses Eigengewicht kann durch Befüllen der Reifen mit Wasser erhöht werden.

Bekannte derartige Silageverdichtungseinrichtungen weisen eine Verdichterwalze auf, deren Drehachse horizontal ausgerichtet ist. Damit erfolgt eine Verdichtung der Silage von oben. Das Verdichten von Silage mit einem Schlepper und einer derartigen bekannten Silageverdichtungseinrichtung erfordert viel Geschick und fahrerisches Können durch den Fahrer des Schleppers. Dennoch können Ränder des Silos nur unvollständig oder überhaupt nicht verdichtet werden. Daher verbleiben an den Rändern des Silos größere Lufteinschlüsse, an denen aerobe Bakterien Schimmelbildung verursachen können.

Aus DE 195 37 085 A1 ist eine Silobeschickungsvorrichtung bekannt, die durch seitlich abgewinkelt angeordnete Reifen zwar eine höhere Verdichtung an den Seiten des Silos erreicht. Jedoch ist diese bekannte Silobeschickungseinrichtung als eigenständiges Fahrzeug ausgebildet, das auch aufgrund seiner Breite nicht zum Transport durch einen Schlepper auf einer Straße geeignet wäre Aus DE 10 2006 012 851 B1 ist ferner ein Silageverdichter bekannt, der ebenfalls als eigenständiges Fahrzeug ausgebildet ist. Seitliche Verdichterwalzen dieses bekannten Silageverdichters können seitlich ausgefahren und durch einen separaten Mechanismus nachfolgend abgesenkt werden. Die Breite des Silageverdichters kann somit verringert werden, wenn keine seitliche Verdichtung mittels der seitlichen Verdichterwalzen erfolgt. Das seitliche Ausfahren und Absenken der seitlichen Verdichterwalzen ist jedoch umständlich.

Der Erfindung liegt nach alledem die Aufgabe zugrunde, bei einer Silageverdichtungseinrichtung, die von einem Schlepper aufnehmbar und betreibbar ist, die Verdichtung an zumindest einer Seite eines Silos zu verbessern.

Die Erfindung löst diese Aufgabe mit einer Silageverdichtungseinrichtung nach Anspruch 1. Bei einer Silageverdichtungseinrichtung, die von einem Schlepper aufnehmbar und betreibbar ist, ist vorgesehen, dass die Silageverdichtungseinrichtung wenigstens eine mittels einer Schwenkachse an einem Träger angelenkte Kantenverdichtungsvorrichtung aufweist, wobei die Kantenverdichtungsvorrichtung gegenüber dem Träger in eine Arbeitsstellung schwenkbar ist, in der die Kantenverdichtungsvorrichtung zum Verdichten eines Seitenrandes eines Silos zu ihrer der Schwenkachse abgewandten Außenseite abfallend geneigt ist, und in eine Transportstellung schwenkbar ist, in der die Kantenverdichtungsvorrichtung zu ihrer Außenseite angestellt ist, und die Silageverdichtungseinrichtung Schwenkmittel aufweist zum Schwenken der Kantenverdichtungsvorrichtung von der Arbeitsstellung in die Transportstellung und von der Transportstellung in die Arbeitsstellung, wobei die Schwenkmittel erfindungsgemäß zum Pressen der Kantenverdichtungsvorrichtung in der Arbeitsstellung gegen den Seitenrand des Silos, dienen.

Die Silageverdichtungseinrichtung kann von einem bekannten Schlepper, insbesondere Walzschlepper, aufgenommen und betrieben werden. Der Träger ist einteilig oder mehrteilig ausgebildet. Die Schwenkachse ist insbesondere ein Drehgelenk. In allen Fällen, in denen gemäß dieser Anmeldung ein Bauteil an einem anderen Bauteil angelenkt ist, sind diese Bauteile vorzugsweise über ein Drehgelenk bzw. Scharnier miteinander verbunden.

Das Schwenken zwischen der Arbeitsstellung und der Transportstellung erfolgt um eine durch das Drehgelenk gegebene Achse. Diese Achse ist zumindest näherungsweise horizontal und in Fahrtrichtung des Schleppers ausgerichtet, wenn die Silageverdichtungseinrichtung vom Schlepper aufgenommen ist.

In der Arbeitsstellung ermöglicht die Erfindung eine vorteilhafte Verpressung der Silage am Rand des aufzubauenden Silos. In der Transportstellung ist die Breite der Silageverdichtungseinrichtung gegenüber möglichen Positionen der Kantenverdichtungsvorrichtung in der Arbeitsstellung verringert. Insbesondere ist die Breite der erfindungsgemäßen Silageverdichtungseinrichtung mit der Kantenverdichtungsvorrichtung in der Transportstellung geringer als die Breite des gegebenenfalls mit Zwillingsreifen ausgerüsteten Schleppers oder nicht breiter als eine herkömmliche von einem Schlepper aufnehmbare Silageverdichtungseinrichtung mit einer herkömmlichen, von oben auf die Silage wirkenden Verdichterwalze.

Gemäß einer vorteilhaften Ausführungsform weisen die Schwenkmittel einen ersten Hebel auf, der an der Kantenverdichtungsvorrichtung angelenkt ist. Mittels dieses ersten Hebels kann die Kantenverdichtungsvorrichtung verschwenkt werden. Gemäß einer vorteilhaften Weiterbildung dieser Ausführungsform weisen die Schwenkmittel auch einen zweiten Hebel auf, der am ersten Hebel angelenkt ist. Vorteilhafterweise ist dieser zweite Hebel gegenüber dem ersten Träger verschwenkbar. Insbesondere ist der zweite Hebel am Träger oder an einem Bauteil, welches fest relativ zum Träger fixiert ist, angelenkt. Über den zweiten Hebel kann der erste Hebel bewegt und damit die Kantenverdichtungsvorrichtung verschwenkt werden.

Gemäß einer bevorzugten Ausführungsform weisen die Schwenkmittel wenigstens einen Hydraulikzylinder auf. Der Hydraulikzylinder ist vorzugsweise einerseits an einer relativ zum Träger festen Position, insbesondere am Träger selbst, angelenkt und andererseits am zweiten Hebel angelenkt. Mittels des Hydraulikzylinders kann somit der zweite Hebel verschwenkt und damit über den ersten Hebel die Kantenverdichtungsvorrichtung verschwenkt werden. Vorzugsweise kann die Kantenverdichtungsvorrichtung um mindestens 90 Grad verschwenkt werden. Besonders bevorzugt kann die Kantenverdichtungsvorrichtung um mehr als 90 Grad, mehr als 120 Grad, mehr als 150 Grad oder sogar um 180 Grad verschwenkt werden. Insbesondere sind die Längen des ersten Hebels und des zweiten Hebels derart relativ zu den Abständen ihrer Anlenkpunkte am Träger bzw. an der Kantenverdichtungsvorrichtung zum Anlenkpunkt der Kantenverdichtungsvorrichtung am Träger bemessen, dass dieser jeweilige Schwenkbereich erreicht wird. Dank dieses großen Schwenkbereiches kann eine Transportstellung erreicht werden, in welcher die Silageverdichtungseinrichtung eine vorteilhaft geringe Breite einnimmt.

Gemäß einer bevorzugten Ausführungsform weist die Kantenverdichtungsvorrichtung eine Reifenpackerwalze auf. Die Reifenpackerwalze weist mehrere an einer Achse aufgereihte Reifen auf, die drehbar gelagert sind. Wenn der Schlepper mit der Silageverdichtungseinrichtung über das Silo fährt und dabei die Reifenpackerwalze gegen den Rand des Silos gepresst wird, drehen sich die Reifen bzw. dreht sich die Reifenpackerwalze. Die Reifenpackerwalze ermöglicht auf kostengünstige Weise eine vorteilhafte Druckübermittlung auf das Silo.

Gemäß einer vorteilhaften Ausführungsform weist die Kantenverdichtungsvorrichtung einen am Träger angelenkten Schwenkarm auf, an dem die Reifenpackerwalze drehbar befestigt ist. Insbesondere sind am Schwenkarm die Enden einer Achse der Reifenpackerwalze gelagert. Dank des Trägers ist die Reifenpackerwalze auch nach einem Verschwenken in jede erreichbare Ausrichtung immer sicher am Schwenkarm gehalten. Zudem stellt der Schwenkarm vorzugsweise einen sicheren Anlenkpunkt für den ersten Hebel bereit.

Gemäß einer bevorzugten Ausführungsform weist die Silageverdichtungseinrichtung eine Vertikalverdichtungsvorrichtung auf. Unter der Vertikalverdichtungsvorrichtung ist eine Vorrichtung zum Verdichten des Silos an seiner flächigen Oberseite oder von oben zu verstehen. Damit ist ein Verdichten des Silos von oben und an wenigstens einem Seitenrand mit der erfindungsgemäßen Silageverdichtungseinrichtung in einem Arbeitsgang möglich.

Vorzugsweise weist die Vertikalverdichtungsvorrichtung eine Verdichterwalze auf. Insbesondere ist die Vertikalverdichtungsvorrichtung als Verdichterwalze ausgebildet.

Die Verdichterwalze ist für die Verdichtung des Silos von oben horizontal quer zur Fahrtrichtung des die Silageverdichtungseinrichtung aufnehmenden Schleppers ausgerichtet und weist eine in diesem Fall im Wesentlichen horizontal ausgerichtete Drehachse auf.

Gemäß einer bevorzugten Ausführungsform ist die Kantenverdichtungsvorrichtung in der Transportstellung senkrecht zur Vertikalverdichtungsvorrichtung ausgerichtet. Insbesondere sind die Drehachsen der Verdichterwalze und der Reifenpackerwalze in der Transportstellung senkrecht zueinander ausgerichtet. Unter dieser senkrechten Ausrichtung ist vorliegend eine Ausrichtung in einem Winkel von 90 Grad oder ungefähr 90 Grad zueinander zu verstehen, wobei die Kantenverdichtungsvorrichtung und die Vertikalverdichtungsvorrichtung vorliegend auch bei einem relativen Winkel zwischen 80 Grad und 100 Grad, insbesondere zwischen 70 Grad und 110 Grad relativ zueinander als senkrecht zueinander ausgerichtet angesehen werden. Aufgrund der im Wesentlichen horizontalen Schwenkachse, mit der die Kantenverdichtungsvorrichtung am Träger angelenkt ist, ist die Kantenverdichtungsvorrichtung in der Transportstellung bei ordnungsgemäßer Aufnahme am Schlepper vertikal oder näherungsweise vertikal ausgerichtet. In vertikaler Ausrichtung kann die Kantenverdichtungsvorrichtung platzsparend transportiert werden.

In der Arbeitsstellung der Kantenverdichtungsvorrichtung kann mittels der Schwenkmittel ein zumindest teilweise seitlich wirkender Pressdruck aufgebracht werden zum zumindest teilweise seitwärts gerichteten Pressen der Kantenverdichtungsvorrichtung gegen den Seitenrand des Silos. Insbesondere weist die Presskraft am Seitenrand des Silos somit nicht nur eine vertikale, sondern auch eine horizontale Komponente auf. Dadurch wird eine besonders vorteilhafte Verpressung erreicht.

Gemäß einer bevorzugten Ausführungsform weist die Silageverdichtungseinrichtung einen Hydraulikanschluss auf. Der Hydraulikanschluss dient zum lösbaren Verbinden mit einem Hydraulikkreis des Schleppers für einen Betrieb der Schwenkmittel mittels dieses Hydraulikkreises. Die Silageverdichtungseinrichtung kann somit von einem Hydraulikaggregat des Schleppers betrieben werden. Ein separater eigener Antrieb an der Silageverdichtungseinrichtung ist folglich entbehrlich. Insbesondere wird der Hydraulikzylinder vom Hydraulikkreis des Schleppers versorgt oder angesteuert.

Gemäß einer Weiterbildung der Erfindung ist ferner ein Überdruckventil vorgesehen, das vorzugsweise einen über den Hydraulikanschluss bereitgestellten hydraulischen Druck begrenzt. Insbesondere wird der hydraulische Druck an der Silageverdichtungseinrichtung auf 50 bar begrenzt.

Vorzugsweise ist ein ansteuerbares Steuerventil vorgesehen, mittels dem ein beliebiger bereitstellbarer hydraulischer Druck auf den Hydraulikzylinder gegeben werden kann. Der Anpressdruck der Reifenpackerwalze an den Seitenrand des Silos kann somit individuell gesteuert werden.

Weitere Ausführungsformen ergeben sich aus den Ansprüchen sowie aus dem anhand der Zeichnungen beschriebenen Ausführungsbeispiel. In den Zeichnungen zeigen:
- Fig. 1:: eine von einem Schlepper aufgenommene Silageverdichtungseinrichtung mit einer in Transportstellung befindlichen Kantenverdichtungsvorrichtung gemäß einem Ausführungsbeispiel der Erfindung in vereinfachter perspektivischer Darstellung, und
- Fig. 2:: einen Teil der Silageverdichtungseinrichtung des Ausführungsbeispiels gemäß Fig. 1 mit der in einer Arbeitsstellung befindlichen Kantenverdichtungsvorrichtung in vereinfachter perspektivischer Darstellung.

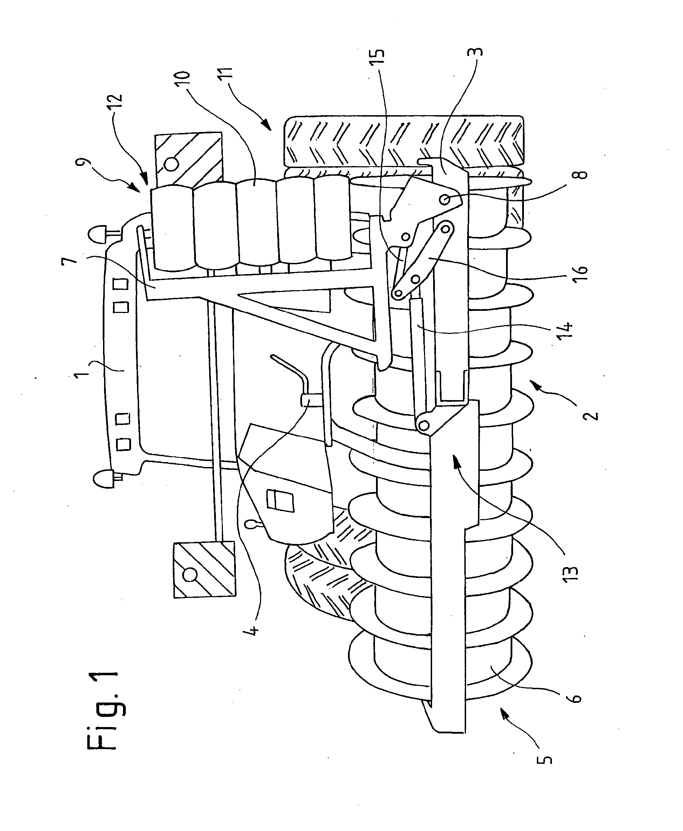

Fig. 1 zeigt einen Schlepper 1 mit einer vom Schlepper 1 heckseitig aufgenommenen Silageverdichtungseinrichtung 2 gemäß einem Ausführungsbeispiel der Erfindung. Ein Träger 3 der Silageverdichtungseinrichtung 2 ist lösbar mit einer herkömmlichen hydraulisch absenkbaren Einrichtung am Heck des Schleppers 1 verbunden. Ferner ist zum Betrieb der Silageverdichtungseinrichtung 2 ein Hydraulikanschluss 4 der Silageverdichtungseinrichtung 2 mit einem Hydraulikanschluss des Schleppers 1 verbunden, um von einem Hydraulikaggregat des Schleppers 1 betrieben zu werden.

Am Träger 3 ist eine Vertikalverdichtungsvorrichtung 5 in Form einer Verdichterwalze 6 um eine horizontal ausgerichtete Achse drehbar gehalten. Ferner ist am Träger 3 ein Schwenkarm 7 mittels einer Schwenkachse 8 um diese Schwenkachse 8 verschwenkbar angelenkt. Der Schwenkarm 7 ist Teil einer Kantenverdichtungsvorrichtung 9, die eine vom Schwenkarm 7 getragene Reifenpackerwalze 10 mit mehreren drehbar gelagerten Reifen aufweist. Die Kantenverdichtungsvorrichtung 9 ist in einer Transportstellung 11 dargestellt, in der die Drehachse der Reifenpackerwalze 10 im Wesentlichen vertikal sowie senkrecht zur Drehachse der Verdichterwalze 6 ausgerichtet ist. Die Kantenverdichtungsvorrichtung 9 ist somit zu ihrer Außenseite 12 angestellt.

Die Silageverdichtungseinrichtung 2 weist Schwenkmittel 13 mit einem über den Hydraulikanschluss 4 angesteuerten Hydraulikzylinder 14, mit einem ersten Hebel 15 und mit einem zweiten Hebel 16 auf. Der zweite Hebel 16 ist in einem definierten Abstand von der Schwenkachse 8 schwenkbar am Träger 3 angelenkt. Ferner sind der zweite Hebel 16 und der Schwenkarm 7 mittels weiterer Gelenke an gegenüberliegende Enden des ersten Hebels 15 angelenkt. Die jeweiligen Abstände der verbindenden Gelenke sind derart gewählt, dass eine mittels des Hydraulikzylinders 14 verursachte Schwenkbewegung des zweiten Hebels 16 über den ersten Hebel 15 in eine vergleichsweise größere Schwenkbewegung des Schwenkarmes 7 umgesetzt wird. Die Erfindung erreicht dadurch einen Schwenkwinkel des Schwenkarmes 7 um 180 Grad.

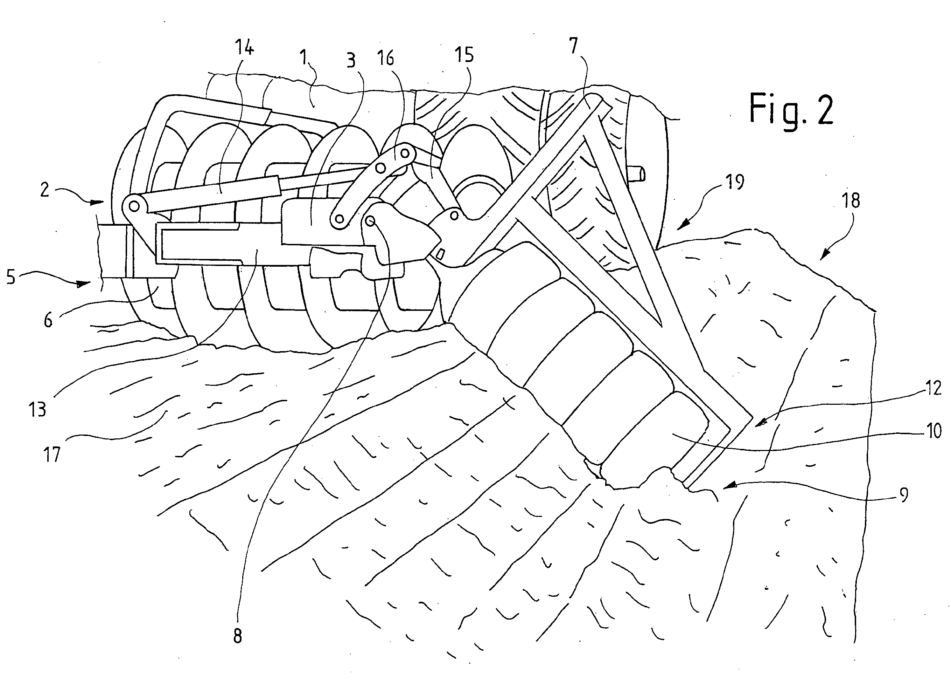

Fig. 2 zeigt einen Ausschnitt der Silageverdichtungseinrichtung des Ausführungsbeispiels gemäß Fig. 1, aufgenommen und betrieben vom Schlepper 1. Der Schlepper 1 befindet sich auf der flachen Oberseite eines Silos 17, welches beispielsweise aus Gras freistehend aufgebaut wird. Die Verdichterwalze 6 liegt dabei auf dem Silo 17 auf und verdichtet die zur Herstellung des Silos 17 verwendete Silage von oben. Am Seitenrand 18 des Silos 17 wird die Reifenpackerwalze 10 mittels der Schwenkmittel 13 gegen die Silage gedrückt und verdichtet das Silo am Seitenrand 18. Ein Pressdruck wird dabei senkrecht zur Drehachse der Reifenpackerwalze 10 auf das Silo 17 ausgeübt. Die Kantenverdichtungsvorrichtung 9 befindet sich in ihrer Arbeitsstellung, in der sie zu ihrer Außenseite 12 abfallend geneigt ist. Der Pressdruck weist dabei einen horizontalen Anteil auf, so dass das Silo 17 am Seitenrand 18 nicht nur von oben, sondern auch seitwärts verdichtet wird. Dadurch wird eine besonders vorteilhafte Verdichtung der Silage des Silos 17 erreicht. Aeroben Bakterien wird dadurch die Überlebensgrundlage entzogen, so dass einem Entstehen von Schimmelnestern wirkungsvoll entgegengewirkt ist.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen Merkmalskombinationen beschränkt, vielmehr sind alle im Rahmen der beanspruchten Merkmalskombinationen als offenbart zu betrachten.

## Patentansprüche

1. Silageverdichtungseinrichtung mit wenigstens einer mittels einer Schwenkachse (8) an einem Träger (3) angelenkte Kantenverdichtungsvorrichtung (9), wobei die Kantenverdichtungsvorrichtung (9) gegenüber dem Träger (3) in eine Arbeitsstellung (19) schwenkbar ist, in der die Kantenverdichtungsvorrichtung (9) zum Verdichten eines Seitenrandes (18) eines Silos (17) zu ihrer der Schwenkachse (8) abgewandten Außenseite (12) abfallend geneigt ist, und in eine Transportstellung (11) schwenkbar ist, in der die Kantenverdichtungsvorrichtung (9) zu ihrer Außenseite (12) angestellt ist, und die Silageverdichtungseinrichtung (2) Schwenkmittel (13) aufweist zum Schwenken der Kantenverdichtungsvorrichtung (9) von der Arbeitsstellung (19) in die Transportstellung (11) und von der Transportstellung (11) in die Arbeitsstellung (19),
**dadurch gekennzeichnet,**
**dass** die Schwenkmittel (13) dem Pressen der Kantenverdichtungsvorrichtung (9) in der Arbeitsstellung (19) gegen den Seitenrand (18) des Silos (17) dienen.

2. Silageverdichtungseinrichtung nach Anspruch 1, **dadurch gekennzeichnet, dass** die Schwenkmittel (13) einen ersten Hebel (15) aufweisen, der an der Kantenverdichtungsvorrichtung (9) angelenkt ist und einen zweiten Hebel (16) aufweisen, der am ersten Hebel (15) angelenkt ist und der gegenüber dem Träger (3) verschwenkbar ist.

3. Silageverdichtungseinrichtung nach Anspruch 2, **dadurch gekennzeichnet, dass** die Schwenkmittel (13) wenigstens einen Hydraulikzylinder (14) aufweisen, der einerseits am Träger (3) und andererseits am zweiten Hebel (16) angelenkt ist.

4. Silageverdichtungseinrichtung nach einem der vorherigen Ansprüche, **dadurch gekennzeichnet, dass** die Kantenverdichtungsvorrichtung (9) um mindestens 90 Grad, insbesondere um mehr als 90 Grad, mehr als 120 Grad, mehr als 150 Grad oder 180 Grad, verschwenkbar ist.

5. Silageverdichtungseinrichtung nach einem der vorherigen Ansprüche, **dadurch gekennzeichnet, dass** die Kantenverdichtungsvorrichtung (9) eine Reifenpackerwalze (10) aufweist.

6. Silageverdichtungseinrichtung nach Anspruch 5, **dadurch gekennzeichnet, dass** die Kantenverdichtungsvorrichtung (9) einen zum Träger (3) angelenkten Schwenkarm (7) aufweist, an dem die Reifenpackerwalze (10) drehbar befestigt ist.

7. Silageverdichtungseinrichtung nach einem der vorherigen Ansprüche, **dadurch gekennzeichnet, dass** die Silageverdichtungseinrichtung (2) eine Vertikalverdichtungsvorrichtung (5) aufweist.

8. Silageverdichtungseinrichtung nach Anspruch 7, **dadurch gekennzeichnet, dass** die Vertikalverdichtungsvorrichtung (5) eine Verdichterwalze (6) aufweist.

9. Silageverdichtungseinrichtung nach Anspruch 7 oder 8, **dadurch gekennzeichnet, dass** die Kantenverdichtungsvorrichtung (9) in der Transportstellung (11) senkrecht zur Vertikalverdichtungsvorrichtung (5) ausgerichtet ist.

10. Silageverdichtungseinrichtung nach einem der vorherigen Ansprüche, **dadurch gekennzeichnet, dass** in der Arbeitsstellung (19) der Kantenverdichtungsvorrichtung (9) mittels der Schwenkmittel (13) ein zumindest teilweise seitlich wirkender Pressdruck aufbringbar ist zum zumindest teilweise seitwärts gerichteten Pressen der Kantenverdichtungsvorrichtung (9) gegen den Seitenrand (18) des Silos (17).

11. Silageverdichtungseinrichtung nach einem der vorherigen Ansprüche, **dadurch gekennzeichnet, dass** die Silageverdichtungseinrichtung (2) einen Hydraulikanschluss (4) aufweist zum lösbaren Verbinden mit einem Hydraulikkreis eines Schleppers (1) für einen Betrieb der Schwenkmittel (13) mittels dieses Hydraulikkreises.

## Claims

1. A silage compression device, comprising at least one edge compression device (9) which is hinged to a carrier (3) by means of a swivel axis (8), wherein the edge compression device (9) can be swiveled with respect to the carrier (3) into a work position (19) in which the edge compression device (9) is slopingly inclined towards its outer side (12) facing away from the swivel axis (8) so as to compress a lateral border (18) of a silage (17), and can be swiveled into a transport position (11) in which the edge compression device (9) is aligned with its outer side (12), and the silage compression device (2) has swiveling means (13) for swiveling the edge compression device (9) from the work position (19) into the transport position (11) and from the transport position (11) into the work position (19),
**characterized in**
**that** the swiveling means (13) serve for pressing the edge compression device (9) in the work position (19) against the lateral border (18) of the silage (17).

2. The silage compression device according to claim 1, **characterized in that** the swiveling means (13) have a first lever (15) which is hinged to the edge compression device (9) and a second lever (16) which is hinged to the first lever (15) and which can be swiveled with respect to the carrier (3).

3. The silage compression device according to claim 2, **characterized in that** the swiveling means (13) have at least one hydraulic cylinder (14) which is hinged to the carrier (3) on one side and to the second lever (16) on the other side.

4. The silage compression device according to any one of the preceding claims, **characterized in that** the edge compression device (9) can be swiveled by at least 90 degrees, in particular by more than 90 degrees, more than 120 degrees, more than 150 degrees or 180 degrees.

5. The silage compression device according to any one of the preceding claims, **characterized in that** the edge compression device (9) has a tire packer roller (10).

6. The silage compression device according to claim 5, **characterized in that** the edge compression device (9) has a swivel arm (7) which is hinged to the carrier (3) and to which the tire packer roller (10) is rotatably attached.

7. The silage compression device according to any one of the preceding claims, **characterized in that** the silage compression device (2) as a vertical compression device (5).

8. The silage compression device according to claim 7, **characterized in that** the vertical compression device (5) has a compression roller (6).

9. The silage compression device according to claim 7 or 8, **characterized in that** in the transport position (11), the edge compression device (9) is aligned perpendicular to the vertical compression device (5).

10. The silage device according to any one of the preceding claims, **characterized in that** in the work position (19) of the edge compression device (9), an at least partly laterally acting contact pressure can be exerted by means of the swiveling means (13) for pressing the edge compression device (9) at least partly sideways against the lateral border (18) of the silage (17).

11. The silage compression device according to any one of the preceding claims, **characterized in that** the silage compression device (2) has a hydraulic connection (4) for detachably connecting to a hydraulic circuit of a tractor (1) for operating the swiveling means (13) by means of said hydraulic circuit.

## Revendications

1. Dispositif de compression d'ensilage avec au moins un dispositif de compression de bords (9) articulé sur un support (3) au moyen d'un axe de pivotement (8), dans lequel le dispositif de compression de bords (9) peut pivoter par rapport au support (3) dans une position de travail (19) dans laquelle le dispositif de compression de bords (9), pour la compression d'un bord latéral (18) d'un silo (17), est incliné vers le bas vers son côté extérieur (12) tournant le dos à l'axe de pivotement (8) et peut pivoter dans une position de transport (11) dans laquelle le dispositif de compression de bords (9) est mis en place contre son côté extérieur (12), et le dispositif de compression d'ensilage (2) présentant des moyens de pivotement (13) pour faire pivoter le dispositif de compression de bords (9) de la position de travail (19) vers la position de transport (11) et de la position de transport (11) vers la position de travail (19),
**caractérisé en ce que**
les moyens de pivotement (13) servent à presser le dispositif de compression de bords (9) contre le bord latéral (18) du silo (17) dans la position de travail (19).

2. Dispositif de compression d'ensilage selon la revendication 1, **caractérisé en ce que** les moyens de pivotement (13) présentent un premier levier (15) qui est articulé sur le dispositif de compression de bords (9) et un deuxième levier (16), lequel est articulé sur le premier levier (15) et lequel peut pivoter par rapport au support (3).

3. Dispositif de compression d'ensilage selon la revendication 2, **caractérisé en ce que** les moyens de pivotement (13) présentent au moins un cylindre hydraulique (14) qui est articulé d'un côté sur le support (3), et de l'autre côté sur le deuxième levier (16).

4. Dispositif de compression d'ensilage selon l'une des revendications précédentes, **caractérisé en ce que** le dispositif de compression de bords (9) peut pivoter au moins de l'ordre de 90 degrés, en particulier de plus de 90 degrés, de plus de 120 degrés, de plus de 150 degrés ou 180 degrés.

5. Dispositif de compression d'ensilage selon l'une des revendications précédentes, **caractérisé en ce que** le dispositif de compression d'ensilage (9) présente un rouleau packer à pneus (10).

6. Dispositif de compression d'ensilage selon la revendication 5, **caractérisé en ce que** le dispositif de compression de bords (9) présente un bras de pivotement (7) articulé vers le support (3) sur lequel le rouleau packer à pneus (10) est fixé de manière rotative.

7. Dispositif de compression d'ensilage selon l'une des revendications précédentes, **caractérisé en ce que** le dispositif de compression d'ensilage (2) présente un dispositif de compression verticale (5).

8. Dispositif de compression d'ensilage selon la revendication 7, **caractérisé en ce que** le dispositif de compression verticale (5) présente un cylindre compresseur (6).

9. Dispositif de compression d'ensilage selon la revendication 7 ou 8, **caractérisé en ce que** le dispositif de compression de bords (9) est orienté perpendiculairement au dispositif de compression verticale (5) dans la position de transport (11).

10. Dispositif de compression d'ensilage selon l'une des revendications précédentes, **caractérisé en ce que**, dans la position de travail (19), une pression d'application s'exerçant au moins partiellement latéralement peut être appliquée au dispositif de compression de bords (9) à l'aide des moyens de pivotement (13) pour le pressage orienté au moins partiellement latéralement du dispositif de compression de bords (9) contre le bord latéral (18) du silo (17).

11. Dispositif de compression d'ensilage selon l'une des revendications précédentes, **caractérisé en ce que** le dispositif de compression d'ensilage (2) présente un raccord hydraulique (4) pour la liaison détachable avec un circuit hydraulique d'un tracteur (1) pour un fonctionnement des moyens de pivotement (13) à l'aide de ce circuit hydraulique.
